(19) Europäisches Patentamt

European Patent Office

Office européen des brevets

(11) **EP 1 267 142 A2**

(12) **EUROPEAN PATENT APPLICATION**

(43) Date of publication:
**18.12.2002 Bulletin 2002/51**

(51) Int Cl.[7]: **G01B 5/004**, G01B 5/20,
G01B 7/004, G01B 7/28,
G01B 21/04, G01B 21/20,
B62D 65/00, B23P 19/04

(21) Application number: **02077027.7**

(22) Date of filing: **23.05.2002**

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **13.06.2001 IT MI20011241**

(71) Applicant: **Advanced Technologies S.r.l.
10044 Pianezza (Torino) (IT)**

(72) Inventor: **Recupero, Antonio
10138 Torino (IT)**

(74) Representative: **Faraggiana, Vittorio, Dr. Ing.
Ingg. Guzzi & Ravizza S.r.l.
Via Vincenzo Monti 8
20123 Milano (IT)**

(54) **Calibration and setting of sensors in an assembly station**

(57) An automated parts assembly station comprises means (11) of positioning and mutual locking of the parts to be assembled, assembly means (13) connecting the parts, and a measurement system (24) for the position of the parts to verify whether the geometry of the assembled part is in conformity with a desired ideal geometry. The measurement system (24) comprises a plurality of relative measurement sensors (15) with each sensor being arranged and fixed in a purposeful seat in an associated appropriate geometrical solid (22). The measurement system has memories containing the position of geometrical spatial specifications of the solid with respect to a reference system chosen for the station and on the basis of the contents of the memories calibrates and sets the operational measurements of the sensors to convert them from relative to the sensor to absolute with respect to said reference system chosen for the station. A calibration and setting method is also described.

Fig. 1

EP 1 267 142 A2

## Description

The present invention relates to a calibration and setting method for sensors in an automatic auto body or similar assembly and welding station to also allow absolute and not just relative measurements of the parts processed by the station. The present invention also relates to a station realized for application of said method.

In the prior art automated precision assembly stations comprising a structure bearing a plurality of locking inserts for mutual positioning of the parts to be assembled are known. Assembly devices, for example articulated robot welding arms, permanently fasten together the parts positioned by the inserts and the finished product is then extracted from the station.

Assembly can take place by welding, gluing, riveting, clinching et cetera depending on peculiar requirements. Examples of assembly stations are welding stations on assembly lines for autos or their parts.

Usually when the assembly line of which the station is a part is made operational, fine setting of the position of the inserts, which ideally represent key reference points of the structure it is desired to assemble, i.e. points through which the structure must pass to be considered excellent, is performed. To this end the inserts are shaped with gripping surfaces (usually consisting of a fixed part and a complementary part facing the movable part) which represent the ideal form at those points of the object which are to be assembled. The inside surfaces are generally shaped starting from the mathematics of the surface of the part it is desired to obtain extracted from the CAD drawings which show it.

Various factors contribute however to making less than ideal the form of the real object produced and it will be subject to geometrical errors which shift it from the optimal shape. Degrading factors can be characteristic of the assembly technique used or due to geometrical changes which occur after the initial setting of the station. For example, in the case of assembly by welding, variations or drifting of the welding parameters can occur such as those due to consumption of the electrode, variation of the electrical current or welding time, change in position or performance sequence of the welding points et cetera. Similar factors can also be found for the other assembly methods.

Geometrical variations can be caused for example by maintenance work and/or station adjustments, wear of moving parts or even variations in the physical parameters of the parts assembled such as variation in composition, thickness or shape et cetera of the parts to be assembled. Variation in thickness of the parts pressed from sheet metal with change of the production lot is typical.

For each reference point a range of tolerance is therefore set within which the article produced must fall to be accepted as an at least satisfactory part.

In the prior art there have been proposed stations having measurement means arranged directly in the locking inserts used in the station so as to be able to measure the deviation of the surface of the article being processed from the insert locking surfaces. After assembly and with the inserts open this allows performance of a relative deviation measurement at the points of the article which by definition if they are positioned with precision should be in contact with the insert reference surfaces even when the locking devices of which the inserts are a part are open. In this manner it is possible to detect configuration defects of the assembled part at the points where the station has the reference inserts.

This is undoubtedly a step forward over the more conventional measurement by sampling at the end of the line of fully assembled parts where defects are identified only when a certain number of defective products have already been produced and where it may be difficult to identify the station responsible for the defect among the many in the line.

But it was found that it is possible that unacceptable configuration defects fall into intermediate positions between the locking inserts. Obviously these defects are neither detected nor detectable by the above mentioned measurement systems incorporated in the inserts of the assembly stations.

On the other hand, arranging measurement sensors outside the inserts considerably complicates the setting up of the station and keeping it efficient.

For example, full use of the results of the measurements requires that they not be only the relative type (as happens by referring merely to deviation from the fixed surfaces of the inserts) and such as to bring to light only the differences between successive measurements but also the absolute type and therefore such as to allow direct comparison between the measured geometry and the theoretical or expected geometry of the part in the station. Absolute measurement can however be had only if the position and orientation in space of the measuring probes are known with respect to the reference system used for definition of the geometry. Calibration of the sensors would be possible using sample parts but this would involve the cost of producing, storing and transporting the sample parts due to their relatively delicate and surely costly nature.

Furthermore, any maintenance work which might involve the sensors - for example, replacement of one of them - would involve the necessity of calibrating the station with the sample part again. It would accordingly be necessary to always keep the sample parts available near the stations for any calibration requirement or even a mere check of measurement system efficiency.

All this is incompatible with the need for flexibility and economy of modern assembly lines.

The general purpose of the present invention is to remedy the above mentioned shortcomings by making available a method for calibration and setting of a geometrical survey system not requiring sample parts in an assembly station, which would allow arrangement of the sensors at any point

where measurement of the part geometry might be desired, rapid restoral of reliable measurement conditions after operations on the station involving the sensors such as for example replacement of a sensor, rapid verification of measurement system efficiency, and absolute and not only relative measurement.

Another purpose of the present invention is to make available an assembly station applying the above mentioned method.

In view of this purpose it was sought to provide in accordance with the present invention a method for calibration and setting of an absolute or relative position measurement system for surfaces of parts in an automatic assembly station for same to verify whether the geometry of the assembled part is in conformity with a desired ideal geometry with the measurement system comprising a plurality of relative measurement sensors with each sensor having its own applied measurement vector and being arranged and fixed in a purposeful seat in an associated appropriate geometrical solid with established spatial relationship between the geometrical spatial specifications of the solid and the applied measurement vector of the sensor with the geometrical solid being in turn fixed permanently in the station and with the method comprising the steps of measuring the spatial position of each geometrical solid with respect to a reference system chosen for the station to identify the position of said geometrical spatial specifications of the solid with respect to said chosen reference system, and applying said established spatial relationship between the geometrical solid and the applied measurement vector to go back from the measured spatial position of said geometrical spatial specifications of the solid to the position and orientation of the applied measurement vector of the sensor associated with the solid, and to the sensor operational measurements made during operation of the station applying as calibration and setting elements for said operational measurements the position and orientation of the applied measurement vector to which return was made.

Still in accordance with the present invention it was also sought to realize an automated part-assembly station comprising means of mutual positioning and locking of the parts to be assembled with assembly means connecting the parts and a measurement system for the position of the parts to verify whether the geometry of the part assembled conforms to a desired ideal geometry characterized in that the measurement system comprises a plurality of relative measurement sensors with each sensor having its own applied measurement vector and being arranged and fixed in a purposeful seat in an associated appropriate geometrical solid with established spatial relationship between geometrical spatial specifications of the solid and the applied measurement vector of the sensor with the geometrical solid being in turn fixed permanently in the station and the measurement system having first memories containing the position of geometrical spatial specifications of the solid with respect to a chosen reference system for the station and second memories containing the zero position of the sensor with respect to a predetermined point of the solid and calculation means which receive the content of said first and second memories with said established spatial relationship between the geometrical solid and the applied measurement vector and operational measurements of the sensors and which on the basis of said content of the memories and said established spatial relationship calibrate and set said operational measurements to convert them from sensor relative to absolute with respect to said chosen reference system for the station.

To clarify the explanation of the innovative principles of the present invention and its advantages compared with the prior art there is described below with the aid of the annexed drawings a possible embodiment thereof by way of non-limiting example applying said principles. In the drawings -

FIG 1 shows a diagrammatic perspective view of a station in accordance with the present invention, and
FIG 2 shows a diagrammatic cross section view of a sensor unit of the station of FIG 1.

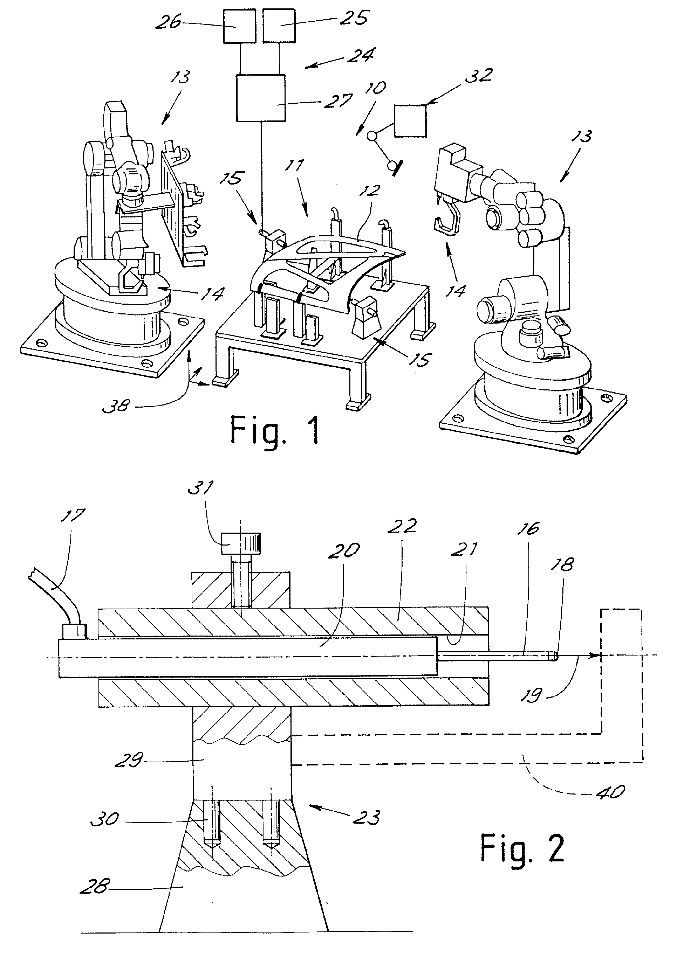

With reference to the figures, FIG 1 shows an automated part assembly station designated as a whole by reference number 10 and comprising reference and positioning means 11 which define the desired mutual position of parts 12 to be assembled and assembly means 13 connecting the parts positioned by the reference means. The parts to be assembled can be for example members of an automotive vehicle body.

The assembly means can employ any known part assembly system such as riveting, welding, gluing et cetera. The FIG shows by way of example robot welding arms with welding electrodes 14.

The reference and positioning means and the assembly means are basically of known type and not further shown nor described being readily imaginable to those skilled in the art.

The station also comprises a measurement system 24 having a plurality of measurement means 15 comprising relative measurement sensors 20.

As may be seen in FIG 2 each sensor has a so-called measurement vector 19 which is the vector with application point coinciding with the sensor zero point, as orientation the measurement axis direction and as disposition that corresponding to increasing measurements. The measurement vector is a characteristic vector of the sensor and is relative thereto. Defining the position of the sensor in the measurement space is accordingly equivalent to defining the applied measurement vector with respect to a reference system. In a preferred embodiment the sensors are deviation detectors having a measurement rod 16 running on command by means of a compressed air supply 17 to rest with one feeling end 18 on the surface of the facing part to be measured.

Each sensor is fastened in a purposeful seat 21 in an associated appropriate geometrical solid 22 with established spatial relationship between geometrical spatial specifications of the solid and the applied measurement vector of the sensor. The geometrical solid 22 is in turn fixed permanently in the station by means of a reference support 23.

The support 23 can be divided in two parts 28, 29 with mutual precision assembly means 30, appropriate pins for example.

Advantageously the geometrical solid 22 is a cylinder and the corresponding sensor is housed therein with applied measurement vector coinciding with the main axis of the cylinder. Again advantageously, the solid can be translatable in a direction parallel to the measurement vector of the associated sensor. Translation locking means 31 are provided.

The station measurement system comprises first memories 25 containing the position of geometrical spatial specifications of each geometrical solid 22 with respect to a reference system chosen for the station (designated diagrammatically by reference number 38 in FIG 1) for example but not necessarily a system of orthogonal Cartesian coordinated axes.

The measurement system also comprises second memories 26 containing the zero position of each sensor with respect to a predetermined point of the solid 22 and calculation means 27 which receive the content of the memories, the established spatial relationship between the geometrical solid and the applied measurement vector and the operational measurements of the sensors and which on the basis of said memory content and the established spatial relationship calibrate and set the operational measurements to convert them from sensor relative to absolute with respect to said reference system chosen for the station.

Before operational functioning of the station it is necessary to calibrate and set the station measurement system. For this purpose the spatial position of each geometrical solid with respect to the reference system chosen for the station is measured first to identify the position with respect to the chosen reference system of said geometrical spatial specifications chosen for the solid.

To do this, an absolute position measurement instrument (designated as a whole by reference number 32 in FIG 1) of a basically known type and which is not further shown nor described herein can be used. This measuring instrument, for example the portable type, is used to read the exact spatial position of the solid and communicate it to the measurement system 24 of the station for storage in its memory. In the case of a cylinder it is possible for example to survey with the instrument 32 an appropriate number of points on the side surface of the cylinder and on at least one of the faces so as to define precisely the position and orientation of the cylinder.

The calculation unit 27 can thus apply said established spatial relationship between the geometrical solid and the applied measurement vector to go back from the measured spatial position of said geometrical spatial specifications of the solid to the position and orientation of the applied measurement vector of the sensor associated with the solid. Through the position and orientation now known of the measurement vector it is possible to convert the measurements of the sensor from relative with respect to its own axis of measurement into absolute with respect to the reference system. To carry out this conversion the transfer functions used to change coordinates can be used. For example, if orthogonal Cartesian coordinates are used the transfer function is:

$$Xa = Xa0 + Ls \cos\alpha x$$

$$Ya = Ya0 + Ls \cos\alpha y$$

$$Za = Za0 + Ls \cos\alpha z$$

where $Xa$, $Ya$, $Za$ = absolute coordinates in the chosen reference system;
$Xa0$, $Ya0$, $Za0$ = coordinates at the point of application of the measurement vector with respect to the chosen reference system;
$Ls$ = reading of the sensor along its own measurement axis; $\cos\alpha x$, $\cos\alpha y$, $\cos\alpha z$ = direction cosines of the measurement vector with respect to the chosen reference system.

Then it is necessary to measure the spatial position of a surface of the geometrical solid with respect to the chosen reference system and carry out with the sensor a relative distance measurement between said surface and an established zero point of the sensor. This can be done by again using the geometrical specifications taken for the solid so as to establish the position of the chosen surface. FIG 2 shows the use of an L gauge 40 of preset precise dimension which is rested on the base or reference piece 29 which for the measurement is to be considered part of the cylinder with the position of this base with respect to the cylinder being known.

The gauge can even be used the opposite way to reset the position of the solid and the sensor with respect to the base or reference piece 29 after disassembly and reassembly. From the measurement is found the sensor zero position which is also memorized by the measurement system. It is thus possible to remove the solid with the sensor and put it in its position in the station while keeping the previous position with precision. This makes it possible for example to replace a faulty sensor with an already set replacement or remove the solid with the sensor for maintenance work or the like and then put it back in place with no need of new setting operations.

In other words, when installing the sensor the first time, once its final position with respect to the support is reached the known dimension gauge, for example a so-called Johansson block, is placed between the base defining a test part and the point at which the sensor makes the measurement. The gauge must have a dimension such as to take the sensor to approximately half of its measurement range. Of course to cover the entire recording range of the sensors it is necessary to have a rather limited number of gauges, a little more than n=Lr/Ls where Lr is the recording range and Ls is the measurement range of the sensors.

After calibration and setting, the station is operational. During operational functioning of the station, to the operational measurement of each sensor the calculation unit 27 applies as calibration and setting elements the relative distance measurement and the position and orientation of the memorized applied measurement vector.

In this manner the station can operate on absolute measurements, taking with precision the deviations of the assembled parts with respect to the desired ideal conformation. Deviations considered excessive are signaled for rejection or sending of the assembled parts for modification and if desired signaling of assembly problems due to the station which can thus be quickly subjected to maintenance.

If the replacement of a sensor proves necessary it suffices to remove the sensor and its reference solid without removing the reference piece 29. Then the new sensor with its reference body can be inserted and the gauge placed between the reference piece 29 and the point where the sensor makes the measurement. After this, the geometrical solid 22 is run with respect to the base 29 so as to bring the sensor to approximately half of its working range. The solid is locked in this position and the sensor is read. The difference is then calculated between the measured amount and the corresponding measurement made at first installation and the original calibration is corrected by an amount equal to the calculated difference. All calculation can be done by the calculation unit of the measurement system.

In this manner the new sensor is calibrated and inserted coherently in the absolute measurement system in which the original sensor was located.

It is now clear that the predetermined purposes have been achieved by making available a calibration and setting method and an assembly station which permit accurate measurements of dimensional specifications of the assembled parts.

Naturally the above description of an embodiment applying the innovative principles of the present invention is given by way of non-limiting example of said principles within the scope of the exclusive right claimed here. For example it is obvious that the number of sensors and their exact arrangement depend on the conformation of the supporting surface and the positioning errors it is desired to detect. Furthermore, the distance measurement sensors can be any suitable type such as for example optical, inductive, capacitive et cetera. The form and arrangement of the positioning and assembly means can also vary depending on peculiar requirements.

## Claims

1. Method for calibration and setting of an absolute or relative position measurement system for surfaces of parts in an automatic assembly station for same to verify whether the geometry of the assembled part is in conformity with a desired ideal geometry with the measurement system comprising a plurality of relative measurement sensors with each sensor having its own applied measurement vector and being arranged and fixed in a purposeful seat in an associated appropriate geometrical solid with established spatial relationship between the geometrical spatial specifications of the solid and the applied measurement vector of the sensor with the geometrical solid being in turn fixed permanently in the station and with the method comprising the steps of:

   - measuring the spatial position of each geometrical solid with respect to a reference system chosen for the station to identify the position of said geometrical spatial specifications of the solid with respect to said chosen reference system,
   - applying said established spatial relationship between the geometrical solid and the applied measurement vector to go back from the measured spatial position of said geometrical spatial specifications of the solid to the position and orientation of the applied measurement vector of the sensor associated with the solid, and
   - to the sensor operational measurements made during operation of the station applying as calibration and setting elements for said operational measurements the position and orientation of the applied measurement vector to which return was made.

2. Method in accordance with claim 1 comprising the additional steps of:

   - measuring the spatial position of a surface of the geometrical solid with respect to the chosen reference system and making with the sensor a relative measurement of the distance between said surface and an established zero point of the sensor possibly with the interposition of a known dimension gauge, and

- also employing said relative measurement of distance as a calibration and setting element of said operational measurements.

3. Method in accordance with claim 1 **characterized in that** the geometrical solid is a cylinder, said geometrical specifications of the solid comprise the main axis of the cylinder and the applied measurement vector of the sensor is arranged virtually coinciding with said main axis.

4. Automated part-assembly station comprising means of mutual positioning and locking of the parts to be assembled with assembly means connecting the parts and a measurement system for the position of the parts to verify whether the geometry of the part assembled conforms to a desired ideal geometry **characterized in that** the measurement system comprises a plurality of relative measurement sensors with each sensor having its own applied measurement vector and being arranged and fixed in a purposeful seat in an associated appropriate geometrical solid with established spatial relationship between geometrical spatial specifications of the solid and the applied measurement vector of the sensor with the geometrical solid being in turn fixed permanently in the station and the measurement system having first memories containing the position of geometrical spatial specifications of the solid with respect to a reference system chosen for the station and second memories containing the zero position of the sensor with respect to a predetermined point of the solid and calculation means which receive the contents of said first and second memories with said established spatial relationship between the geometrical solid and the applied measurement vector and operational measurements of the sensors and which on the basis of said contents of the memories and said established spatial relationship calibrate and set said operational measurements to convert them from sensor relative to absolute with respect to said chosen reference system for the station.

5. Station in accordance with claim 4 **characterized in that** the geometrical solid is a cylinder and the corresponding sensor is housed therein with applied measurement vector coinciding with the main axis of the cylinder.

6. Station in accordance with claim 4 **characterized in that** the geometrical solid is translatable in a direction parallel to the associated sensor measurement vector.

7. Station in accordance with claim 4 **characterized in that** the geometrical solid is fixed to the station with interposition of precise reference means of the position in such a manner as to allow its removal and replacement in position in the station while holding its position.

8. Station in accordance with claim 7 **characterized in that** the calculation unit corrects measurements of the sensor on the basis of position measurements between the sensor and a support unit of the solid memorized in the memories.

Fig. 1

Fig. 2